# EUROPEAN PATENT APPLICATION

(11) **EP 1 357 051 A1**
(43) Date of publication of application: **29.10.2003**
(21) Application number: 03252521.4
(22) Date of filing: 22.04.2003
(51) Int. Cl.: B65D 75/34

(54) **Dispensing containers**

(30) Priority: 23.04.2002 GB 0209147; 07.11.2002 GB 0225983; 12.12.2002 GB 0228920
(71) Applicant: Future Technology (UK) Ltd., Kineton, Warwick CV35 OJD (GB)
(72) Inventor: Elliott, Howard, Stratford on Avon, Warwickshire CV37 7SS (GB)
(74) Representative: Thacker, Darran

(57) **Abstract**

A container for storing and dispensing consumer products comprises a multi-compartment moulded tray (1) formed with an array of discrete cavities (3) for receiving one or more consumer products. A cover (4) is secured by an adhesive to the generally planar top surface (2) of the tray (1) to retain the one or more consumer product items within the cavities (3). The cover (4) has pre-defined tear lines (6) defining the peripheries of an array of tear-off portions (5), each tear-off portion (5) is arranged so that in use it overlies an associated one of the cavities (3) to retain the one or more consumer product items in that cavity (3) until it is removed. Each tear-off portion (5) has an associated lug portion (7) for gripping by a user preparatory to removing the said tear-off portion (5). The top surface (2) of the tray (1) has a hole (8) beneath each lug portion (7) through which the consumer can insert a part of their finger or some other object to selectively bend the lug portions (7) upwardly out of the plane of the remainder of the cover (4) from below the tray to make the lugs (7) readily graspable by the consumer.

## Description

### Technical Field

The invention relates to containers for storing and dispensing consumer products. The term consumer products is intended to cover a wide variety of products as illustrated by the following (non-exhaustive) list: foods, either for immediate consumption, pre-cooked, prepared or oven ready, including prepared meals, confectionary, hardware and DIY items, cosmetics, seeds, animal and fish feeds, electronic components, medical appliances and dressings, medicines and medication such as pills, tablets and capsules.

### Background Art

Many consumer products such a medicines and medication such as pills, tablets and capsules, household cleaning products, toiletries and garden chemicals are sold in child-resistant containers. It is recognised that many child-resistant containers obtain their child resistant properties by asking the person opening the container to undertake two different actions at the same time. A typical example of such a container is a tablet bottle where the consumer is required to push the screw cap down and twist it at the same time before it can be removed.

Tests have repeatedly shown that some conventional dispensing containers such as blister packs for storing medication are not child resistant and there is increasing pressure to make all dispensing containers incorporate some sort of child-resistant feature. However, any child resistant feature must not prevent users such as the elderly from being able to dispense the contents of the container without difficulty.

### Summary of the Invention

The invention provides a container for storing and dispensing consumer products, comprising:
a tray having a generally planar top surface into which has been formed one or more discrete cavities for receiving the consumer products; and
a cover film to be secured to the generally planar top surface of the tray to seal the one or more cavities to retain the consumer products in the one or more cavities;
the cover film having pre-formed tear lines defining a tear-off portion corresponding to the periphery of the or each cavity to retain the consumer products in the associated cavity until it is removed by tearing along its tear lines, the or each tear-off portion having an associated lug portion, for gripping by a consumer preparatory to tearing off the said tear-off portion;
CHARACTERISED IN THAT the top surface of the tray includes means positioned beneath the or each lug portion in use to allow the consumer to selectively bend that lug portion upwardly out of the plane of the remainder of the cover film from below the tray.

The means positioned beneath the or each lug portion creates or provides for a protrusion above the planar top surface of the tray which lifts the lug portion so that it can be easily grasped by the consumer. Examples include an aperture, a snap-off portion, a resilient tab and an inverting dome-shaped dimple. Each of the means provides a barrier of strength, dexterity and/or cognisance so that the container incorporates a child-resistant feature.

The top surface of the tray can be provided with an aperture positioned to be located beneath the or each lug in use. The consumer can then insert part of their finger or some other object into the aperture from below the tray to selectively bend the overlying lug portion upwardly out of the plane of the remainder of the cover film. The lug portion can then be easily grasped by the consumer for removal of the tear-off portion. If the consumer removes their finger or the other object from the aperture then it is preferred that the overlying lug portion will bend back so that it lies flat against the top surface of the tray. In this way, the person opening the container is asked to undertake two different actions at the same time: to bend the overlying lug portion upwardly out of the plane of the remainder of the cover film and to remove the associated tear-off portion. This makes the dispensing container child-resistant.

The top surface of the tray can have a snap-off portion positioned to be located beneath the or each lug in use. The snap-off portion is attached to the remainder of the top surface of the tray by one or more frangible bridges or a frangible region. To dispense the contents of a cavity, the consumer must push the snap-off portion from below the tray to break the frangible bridges or the frangible region and release it from the remainder of the tray. Once released, the snap-off portion will selectively bend the overlying lug portion upwardly out of the plane of the remainder of the cover film.

It will be appreciated that a child may not have the physical strength or ability to break the frangible bridges or frangible region to release the snap-off portion from the remainder of the tray. However, this should not present such a difficulty for elderly consumers.

The snap-off portion is preferably adhered to the underside of the associated lug portion in use so that it can be grasped together with the lug portion to remove the associated tear-off portion of the cover film.

For consumers who are blind or partially sighted, the snap-off portion is a useful indicator to show when the contents of a particular cavity have already been dispensed. The blind or partially sighted consumer can feel the bottom surface of the tray with their fingers and know that if a snap-off portion has been released from the tray then the contents of the associated cavity have already been dispensed.

The top surface of the tray may have a resilient tab positioned to be located beneath the or each lug in use so that the consumer can push the tab up from below the tray to selectively bend the overlying lug portion upwardly out of the plane of the remainder of the cover film. The or each tab can be defined by a cut line or a pre-perforated tear line corresponding to the periphery of the associated lug and is connected to the remainder of the top surface of the tray by a hinged portion so that it can bend upwardly by pivotal flexure about the hinged portion. As an additional child-resistant feature, the or each resilient tab can also be connected to the remainder of the tray by one or more frangible bridges or a frangible region. The pivotal flexure of the tab causes the overlying lug portion to bend upwardly out of the plane of the remainder of the cover film where it can be easily grasped by the consumer for removal of the tear-off portion.

The overlying lug portion may be adhered to the underside of the associated lug portion in use.

It is preferred that the tab will flex back to lie in the plane of the top surface of the tray if the consumer stops pushing the tab up from below. This means that the person opening the container is asked to undertake two different actions at the same time: to press the resilient tab up from below the tray to bend the overlying lug portion upwardly out of the plane of the remainder of the cover film and to remove the associated tear-off portion. However, it is also possible for the resilient tab to be made to stay in its deformed position and not to flex back to lie flat in the plane of the top surface of the tray. This makes sure that the overlying lug portion remains above the plane of the remainder of the cover film so that it can be easily grasped by the consumer. However, it will be readily appreciated that this may make the container less child-resistant.

The or each tab is preferably provided with a downwardly extending protrusion. The consumer can feel underneath the tray with their fingers for the protrusion and use it to push the tab up out of the plane of the top surface of the tray.

The top surface of the tray may have an inverting dome-shaped dimple positioned to the located beneath the or each lug in use. The or each dimple will initially extend downwardly so that its concave face will be presented to the underside of the associated lug portion. The consumer can then selectively push the dimple up from below the tray so that it inverts and presents its convex face to the underside of the overlying lug. This will cause the lug to bend upwardly out of the plane of the remainder of the cover film. The lug portion preferably does not adhere to the convex face of the dimple when it has been inverted. This can be achieved by not applying any adhesive to the underside of the or each lug portion.

The dimple can be resilient so that it will return to its initial position where it extends downwardly from the bottom surface of the tray if the consumer stops pushing the dimple from below. This allows the overlying lug portion to bend back so that it lies flat against the top surface of the tray. However, if the dimple remains in its inverted state then it provides a useful indicator for consumers who are blind or partially sighted. The blind or partially sighted consumer can feel the bottom surface of the tray with their fingers and know that if a dimple is inverted then the contents of the associated cavity have already been dispensed.

The frangible bridges or frangible region securing the or each snap-off portion to the remainder of the tray, the pre-perforated tear line or frangible bridges around the or each resilient tab and the or each inverting dimple can also act as tamper-evident features. For example, if the frangible bridges or frangible region securing a snap-off portion are broken, but the associated tear-off portion has not been removed, then this indicates to the consumer that there is a possibility that the consumer products retained in that cavity have been interfered with. Tamper-evident features are particularly important if the consumer products are medication such as pills, tablets or capsules, or food.

The cover film is preferably secured to the generally planar top surface of the tray by an adhesive. The adhesive may be a co-adhesive, a pressure contact adhesive, a peelable adhesive or a heat sensitive lacquer, the latter being utilized in a heat-sealing process.

The cover film may be a metal foil, such as aluminium foil, a metallized polymeric film or paper sheet, or a plastics film of single or multiple layer construction depending on the sort of consumer products to be stored and dispensed from the container.

To provide a further child-resistant feature, it is preferred that the periphery of the or each lug portion is defined by pre-scored or pre-perforated tear lines. This prevents a child from simply scraping a fingernail over the cover film to lift up a particular lug portion. The pre-scored tear lines may be created in the manufacturing process by pressing a knife on to the surface of the cover film so as to cut or score part way through but not fully through the thickness of the cover film. However, it will also be appreciated that the lug portions of the or each tear-off portion can be defined by cut lines extending completely through the material of the cover film around the whole of the periphery of the or each lug portion except for a hinged portion connecting that lug portion to its associated tear-off portion. In either case, the lug portion is bent upwardly out of the plane of the remainder of the cover film by pivotal flexure about the hinged portion.

The container may be used in place of conventional blister packs for the packaging of pills, tablets or capsules.

The container may also be used as a multi-compartment container for organising and storing mixed medication for subsequent dispensation according to a predefined dosage regimen. The principle behind such mixed medication containers is that a dosage regimen of mixed medication can be organised in advance for a period of a week or more, and a patient or nurse can then remove from the container, at predefined times over the said period, the one or more pills, tablets and/or capsules to be administered on each occasion according to the dosage regimen.

### Drawings

Figure 1 is a top view of a blister pack dispensing container according to a first embodiment of the present invention;
Figure 2 is a side view of the blister pack of Figure 1;
Figure 3 is top view of a blister pack dispensing container according to a second embodiment of the present invention;
Figure 4 is top view of a blister pack dispensing container according to a third embodiment of the present invention;
Figure 5 is a side view of the blister pack of Figure 4;
Figure 6 is top view of a blister pack dispensing container according to a fourth embodiment of the present invention;
Figure 7 is a side view of the blister pack of Figure 6 with both of the visible dimples in their initial state; and
Figure 8 is a side view of the blister pack of Figure 6 with one of the visible dimples in its inverted state.

Although the dispensing container according to the present invention is suitable for storing and dispensing a wide variety of consumer products, the rest of the specification will concentrate on its use as a blister pack for storing and dispensing medication such as pills, tablets and capsules.

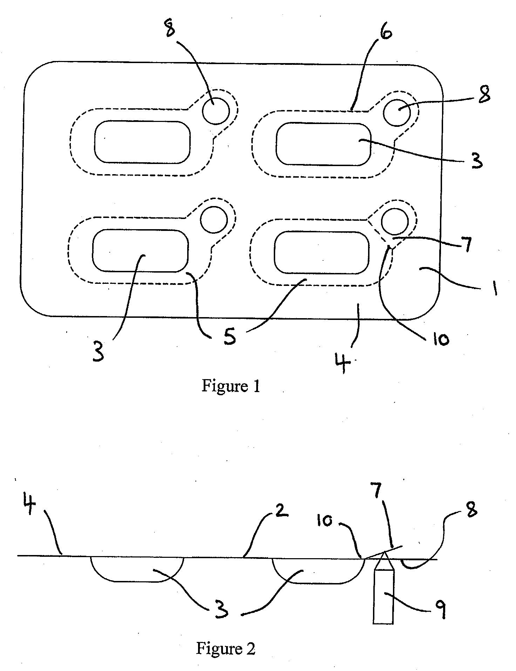

Figures 1 and 2 show a blister pack for storing and dispensing medication. The blister pack has a tray 1 that is formed from a sheet of thermoplastics material and may be formed by press moulding or by vacuum forming, for example.

The tray 1 has a generally planar top surface 2 into which has been formed a series of discrete cavities 3 which each retain a pill, tablet or capsule (not shown). A cover 4 is adhered to the planar top surface 2 of the tray 1 using a peelable adhesive. It is a sheet of smooth and flexible plastics film of single layer construction. However, the sheet can have a multiple layer construction that incorporates a tamper-evident feature. The cover 4 has a series of tear-off portions 5 each of which is defined by a peripheral score line 6 and includes a lug portion 7. The score line 6 is a predefined zone of weakness in the cover 4, which in use defines a preferred tear line in the plastics film.

A hole 8 is formed in the planar top surface 2 of the tray 1 beneath each of the lug portions 7. To dispense the contents of a cavity 3 the consumer can insert part of their finger or some other object 9 through one of the holes 8 and push the associated lug portion 7 upwards from below the tray. This action forces the score line 6 to tear around the lug 7 so that it can flex upwardly out of the plane of the remainder of the cover 4 around a zone of flexure or hinge area 10 (one of which is shown dotted in Figure 1). The lug portion 7 can then be very easily grasped between thumb and forefinger to remove the associated tear-off portion 5 and dispense the mediation in the associated cavity 3. If the object 9 is removed from the hole 8 then the lug portion 7 will bend back so that it lies in the plane of the remainder of the cover 4. The consumer therefore has to carry out two different actions at the same time for the medication to be properly dispensed.

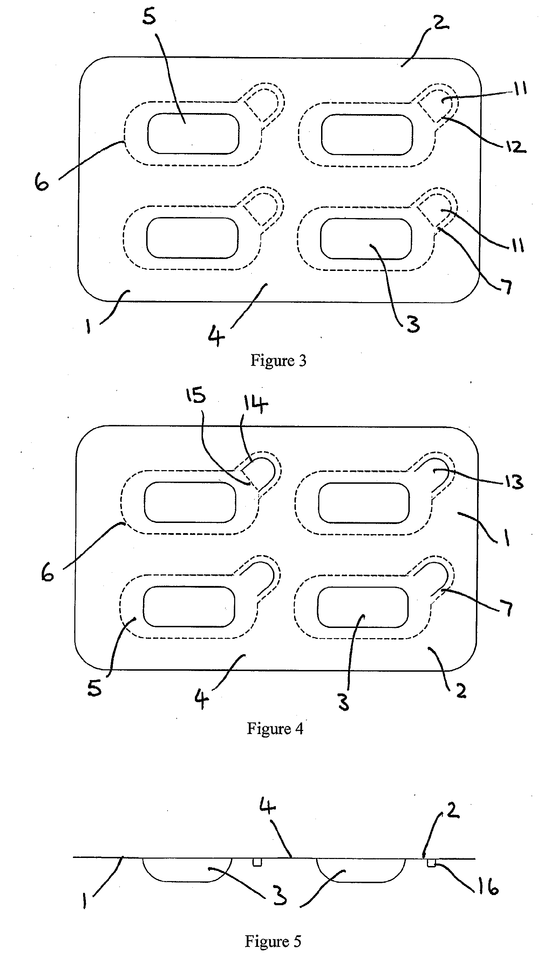

Figure 3 shows an alternative blister pack that is very similar to the blister pack shown in Figures 1 and 2. Like parts have been given the same reference numerals.

Instead of a series of holes, the planar top surface 2 of the tray 1 is provided with a series of snap-off portions 11. The snap-off portions 11 are attached to the remainder of the tray 1 by a frangible region 12 which defines a zone of weakness in the top surface 2 of the tray. The snap-off portions 11 can also be attached to the tray 1 by one or more frangible bridges.

To dispense the contents of a cavity 3, the consumer can push one of the snap-off portions 11 up from below. This will break the frangible region 12 to separate the snap-off portion 11 from the tray 1. This action forces the score line 6 to tear around the overlying lug portion 7 and bends it upwardly out of the plane of the remainder of the cover 4. The snap-off portions 11 are adhered to the underside of the lug portions 7 so that they can be grasped by the consumer with the associated lug to remove the tear-off portion 5 and dispense the medication.

Figures 4 and 5 show an alternative blister pack that is very similar to the blister pack shown in Figures 1 and 2. Like parts have been given the same reference numerals.

The blister pack shown in Figures 4 and 5 has a resilient tab 13 positioned beneath each of the lug portions 7 in use. Each tab 13 is defined by a perforated tear line 14 and is attached to the remainder of the top surface 2 of the tray 1 by a zone of flexure or hinge area 15 (one of which is shown dotted in Figure 4). A downwardly extending protrusion 16 is provided on the bottom side of each of the tabs 13.

To dispense the contents of a cavity 3, the consumer can feel underneath the tray 1 with their fingers for one of the protrusions 16 and use this to push the associated tab 13 up from below. The tear line 14 will break and allow the tab 13 to flex upwardly out of the plane of the remainder of the top surface 2 of the tray 1 around the hinge area 15. The upward flexure of the tab 13 causes the score line 6 to tear around the lug portion 7 so that it too can flex upwardly out of the plane of the remainder of the cover 4. The lug portion 7 can then be easily grasped between thumb and forefinger to remove the associated tear-off portion 5 and dispense the medication in the associated cavity 3. If the consumer stops pushing the tab 13 up from below, it will flex back so that it lies in the plane of the remainder of the top surface 2 of the tray 1. The lug 7 will then bend back so that it cannot be easily grasped by the consumer. The consumer therefore has to carry out two different actions at the same time for the medication to be properly dispensed.

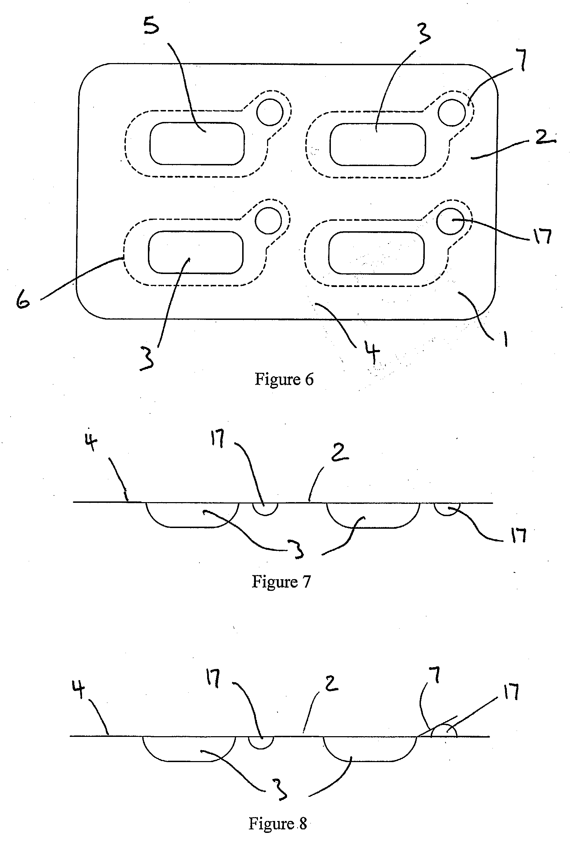

Figures 6 to 8 show an alternative blister pack that is very similar to the blister pack shown in Figures 1 and 2. Like parts have been given the same reference numerals.

The blister pack shown in Figures 6 to 8 has a dome-shaped inverting dimple 17 positioned below each of the lug portions 7 in use. The dimples 17 are integrally formed as part of the top surface 2 of the tray 1. In their initial state (as shown in Figure 7), each of the dimples 17 extend downwardly so that they present their concave face to the overlying lug portion 7. The consumer can then feel underneath the tray 1 with their fingers and push one of the dimples 17 up from below the tray. This will cause the dimple 17 to invert (as shown in Figure 8) so that it extends above the top surface 2 of the tray 1 and presents its convex face to the underside of the associated lug 7. Inverting the dimple 17 causes the tear line 6 to tear around the overlying lug portion 7 so that it can flex upwards out of the plane of the remainder of the cover 4 where it can be easily grasped by the consumer to remove the associated tear-off portion 5.

## Claims

1. A container for storing and dispensing consumer products comprising:
a tray (1) having a generally planar top surface (2) into which has been formed one or more discrete cavities (3) for receiving the consumer products; and
a cover film (4) to be secured to the generally planar top surface (2) of the tray (1) to seal the one or more cavities (3) to retain the consumer products in the one or more cavities (3);
the cover film (3) having pre-formed tear lines (6) defining a tear-off portion (5) corresponding to the periphery of the or each cavity (3) to retain the consumer products in the associated cavity (3) until it is removed by tearing along its tear lines (6), the or each tear-off portion (5) having as associated lug portion (7), for gripping by a consumer preparatory to tearing off the said tear-off portion (5);
**CHARACTERISED IN THAT** the top surface (2) of the tray (1) includes means (8,11,13,17) positioned beneath the or each lug portion (7) in use to allow the consumer to selectively bend that lug portion (7) upwardly out of the plane of the remainder of the cover film (4) from below the tray.

2. A container according to claim 1, wherein the top surface (2) of the tray (1) has an aperture (8) positioned to be located beneath the or each lug portion (7) in use so that the consumer can insert an object (9) into the aperture (8) from below the tray to bend that lug portion (7) upwardly out of the plane of the remainder of the cover film (4).

3. A container according to claim 1, wherein the top surface (2) of the tray (1) has a snap-off portion (11) positioned to be located beneath the or each lug portion (7) and secured to the remainder of the tray by one or more frangible bridges or a frangible region (12) so that the consumer can push the snap-off portion (11) upwardly from below the tray to release the snap-off portion (11) from the remainder of the tray (2) and bend that lug portion (7) upwardly out of the plane of the remainder of the cover film (4).

4. A container according to claim 3, wherein the or each lug portion (7) is adhered to an associated snap-off portion (11).

5. A container according to claim 1, wherein the top surface (2) of the tray (1) has a resilient tab (13) positioned to be located beneath the or each lug portion (7) in use so that the consumer can push the tab (13) upwardly from below the tray to bend that lug portion (7) upwardly out of the plane of the remainder of the cover film (4).

6. A container according to claim 5, wherein the or each tab (13) is defined by a cut line corresponding to the periphery of the associated lug portion (7) and is connected to the remainder of the tray (1) by a hinge portion (15).

7. A container according to claim 5, wherein the or each tab is defined by a pre-formed tear line (14) corresponding to the periphery of the associated lug portion (7) and is connected to the remainder of the tray (1) by a hinge portion (15).

8. A container according to any of claims 5 to 7, wherein the or each tab (13) is provided with a downwardly extending protrusion (16).

9. A container according to claim 1, wherein the top surface (2) of the tray (1) has a downwardly extending dimple (17) positioned to be located beneath the or each lug portion (7) in use and which can be inverted so that the dimple (17) is upwardly extending to bend that lug portion (7) upwardly out of the plane of the remainder of the cover film (4).

10. A container according to any preceding claim, wherein the lug portion (7) is defined by a pre-formed tear line (6).

11. A container according to any preceding claim, wherein the cover film (4) is secured to the top surface (2) of the tray (1) by an adhesive.

12. A container according to any preceding claim, wherein the cover film is a metal foil, a metallized polymeric film or paper sheet, or a plastics film of single or multiple layer construction.
